# EUROPÄISCHE PATENTSCHRIFT

(11) **EP 0 888 938 B1**
(45) Veröffentlichungstag und Bekanntmachung des Hinweises auf die Patenterteilung: **31.10.2001**
(21) Anmeldenummer: 98117274.5
(22) Anmeldetag: 19.05.1995
(51) Int. Cl.: B60R 22/44, B60R 22/34

(54) **Federangetriebener Aufroller für Sicherheitsgurte**
Spring-based seat belt retraction device
Enrouleur de ceinture de sécurité rappelée par ressort

(30) Priorität: 06.07.1994 DE 4423729
(43) Veröffentlichungstag der Anmeldung: 07.01.1999
(62) Teilanmeldung aus: 95107750.2
(73) Patentinhaber: TAKATA (EUROPE) VEHICLE SAFETY TECHNOLOGY GmbH, 89081 Ulm (DE)
(72) Erfinder: Kopetzky, Robert, 89173 Lonsee (DE); Dreizler, Sabine, 70619 Stuttgart (DE); Diepold, Ulrich, 89081 Ulm (DE); Pleyer, Matthias, 89250 Senden (DE)
(74) Vertreter: Manitz, Gerhart, Dr.

(56) Entgegenhaltungen:
- EP-A- 0 581 228
- US-A- 3 075 724
- US-A- 4 303 208
- US-A- 4 630 841

## Beschreibung

Die Erfindung betrifft einen federangetriebenen Aufroller für Sicherheitsgurte nach dem Oberbegriff des Patentanspruchs 1. Das flexible Zugelement besteht vorzugsweise aus einem vergleichsweise dünnen Faden, dessen Dicke etwa einige Zehntel mm beträgt.

Es ist bereits ein Kabelführungsmechanismus für eine Konstantspannungsrolle bekannt (US-A-3 075 724), bei der an der den größeren Querschnitt aufweisenden Stirnseite einer sich verjüngenden Zuggliedrolle ein zylindrisches Federgehäuse angeordnet ist, welches auf der von der Zuggliedrolle abgewandten Stirnseite von einem Deckel abgeschlossen ist und mit einer Spiralfeder zur Erzeugung einer Vorspannung an der Zuggliedrolle versehen ist.

Ein gattungsgemäßer, federangetriebener Aufroller für Sicherheitsgurte bei Kraftfahrzeugen ist aus der EP O 581 228 A1 bekannt. Der die Federanordnung aufnehmende Hohlraum ist durch eine ebene Wand eines Gehäuses nach außen abgeschlossen, welches die erste und zweite Zuggliedrolle umgibt. Aufgrund von Reibung an den umgebenden Bauelementen hat die Federanordnung eines erfindungsgemäßen Gurtaufrollers eine beträchtliche Hysterese, was bedeutet, daß die Gurtrückzugskraft wesentlich geringer ist als die für das Ausziehen des Gurtes aufzubringende Kraft.

Das Ziel der Erfindung besteht darin, die Hysterese der Federanordnung deutlich herabzusetzen. Außerdem soll die Montage der Federanordnung erleichtert werden.

Zur Lösung dieser Aufgabe sieht die Erfindung bei einem Gurtaufroller der eingangs genannten Gattung die Merkmale des kennzeichenden Teils des Anspruches 1 vor.

Zwar findet aufgrund der stationären Anordnung des radial inneren Endes der Federanordnung eine gewisse Reibung an den die Federanordnung umgebenden Teilen der Zuggliedrolle statt, doch wird gleichwohl die Hysterese der Federanordnung wesentlich herabgesetzt, weil die die größten Wege zurücklegenden Bereiche der Federanordnung sich radial außen befinden. Durch die vorzugsweise als Abdeckplatte ausgebildete Abdeckung wird weiter die Montage der Federanordnung innerhalb des Hohlraums der zweiten Zuggliedrolle erleichtert.

Problematisch ist ein erfindungsgemäß arbeitender Gurtaufroller dann, wenn die Gurtrolle zusätzlich durch eine andere Antriebsquelle als die Zuggliedrollenanordnung, z.B. durch eine Gurtstraffervorrichtung beaufschlagt werden kann. In diesem Falle könnte es vorkommen, daß die erste Zuggliedrolle in Abwickelrichtung des flexiblen Zuggliedes so stark beschleunigt wird, daß das flexible Zugglied trotz der es spannenden Federanordnung schlaff wird und durchhängt, wodurch die Gefahr eines Herausgleitens aus den Führungsrollen besteht.

Eine vorteilhafte Weiterbildung der Erfindung nach Anspruch 2 gewährleistet eine einwandfreie Kraftübertragung von der federgespannten Zuggliedrollenanordnung auf die Gurtrolle beim normalen Betrieb.

Wird jedoch an der Gurtrolle z.B. bei einer unfallbedingten Beschleunigung ein Gurtstraffer wirksam, der die Gurtrolle schlagartig in Aufwickelrichtung in Drehung versetzt, so verhindert der Freilauf eine Drehmomentübertragung auf die erste Zuggliedrolle, wodurch das Zugglied auch aufgrund der Wirkung der Federanordnung voll gespannt bleibt und die Gefahr eines Herausspringens aus den Führungsrillen gebannt ist.

Da ein Freilauf mit abrupten Beschleunigungen bzw. Verzögerungen arbeitet und im übrigen kostspielig sowie nur schwer platzsparend unterzubringen ist, besteht ein weiteres Ziel der Erfindung darin, ein Abspringen des Zuggliedes von einer der Zuggliedrollen wirksam zu verhindern, wenn an der Gurtrolle hohe Drehbeschleunigungen bzw. -verzögerungen in Zugglied-Entspannungsrichtung auftreten sollten, wobei die dafür erforderlichen Maßnahmen mit geringem Aufwand durchführbar sein sollen sowie der Platzbedarf nur unwesentlich erhöht wird. Insbesondere sollen abrupte Beschleunigungen der ersten Zuggliedrolle durch die Gurtrolle wirksam vermieden werden.

Hierzu sieht die Erfindung die Weiterbildungen nach den Ansprüchen 3 und 4 vor.

Aufgrund dieser Ausbildung werden abrupte Geschwindigkeitsänderungen zwischen Gurtrolle und erster Zuggliedrolle wirksam vermieden. Das elastisch nachgiebige Drehmomentübertragungsglied verhindert also nicht nur ein Schlaffwerden des sich zwischen den Zuggliedrollen erstreckenden Zuggliedes, sondern bewirkt darüber hinaus auch noch eine Dämpfung der von der einen auf die andere Rolle übertragenen Drehmomente. Ein weiterer Vorteil dieser Ausführungsform besteht darin, daß insbesondere elastische Drehmomentübertragungsglieder sehr robust und betriebssicher ausgebildet sein können sowie mit geringem Platzbedarf auskommen.

Vorteilhafte Weiterbildungen dieser Ausführungsform sind durch die Ansprüche 4 bis 12 gekennzeichnet.

Die vorstehend definierte Ausführungsform erweist sich in den folgenden Betriebsfällen als vorteilhaft:
- Sofern ein beispielsweise mit einer pyrotechnischen Ladung arbeitender Gurtstraffer vorgesehen ist, der beispielsweise mittels einer pyrotechnischen Ladung bei einem Unfall ein schlagartiges Drehen der Gurtrolle in Gurtaufwickelrichtung auslöst, verzögert sich aufgrund der Trägheit der ersten Zuggliedrolle, die erfindungsgemäß auch in geeigneter Weise beispielsweise durch eine entsprechend schwere Ausbildung erhöht werden könnte, die Übertragung der plötzlichen Drehbewegung der Gurtrolle in Gurtaufwickelrichtung in einem solchen Maße, daß das sich zwischen erster und zweiter Zuggliedrolle erstreckende Zugglied nicht schlaff wird und so keine Gefahr eines Herausspringens aus den Zuggliedaufnahmerillen besteht.
- Sofern der Gurtstraffer am Gurtschloß vorgesehen ist, erfolgt bei einer unfallbedingten Auslösung zunächst eine starke momentane Beschleunigung der Gurtrolle in Abwickelrichtung, welche ohne das erfindungsgemäße nachgiebige Drehmomentübertragungsglied den Faden bis zum Reissen beanspruchen könnte. Die Drehung der Gurtrolle wird jedoch sofort wieder durch Wirksamwerden der üblicherweise vorgesehenen Auszugssperre abrupt gestoppt. Bei dieser plötzlichen Abbremsung kann durch Nachlaufen der entsprechend stark beschleunigten zweiten Zuggliedrolle das Zugglied ebenfalls schlaff werden und aus einer der Rille herausspringen. Auch in diesem Fall dämpft das erfindungsgemäß vorgesehene Drehmomentübertragungsglied die Bewegung der ersten Zuggliedrolle in einem Maße, daß eine vollständige Entspannung des sich frei zwischen den Zuggliedrollen erstreckenden Fadenstücks vermieden wird.
- Die Dämpfung macht sich auch dann vorteilhaft bemerkbar, wenn der Sicherheitsgurt vom Benutzer beim Anlegen zu schnell ausgezogen wird, wodurch es ebenfalls zum plötzlichen Abbremsen der stark beschleunigten Gurtrolle durch die wirksam werdende Auszugssperre kommt.
- Die Vorspannung des elastisch nachgiebigen Drehmomentübertragungsgliedes hat den Vorteil, daß die relative Dämpfungsbewegung der Gurtrolle und der ersten Zuggliedrolle in beiden Drehrichtungen auftritt.

Ein weiteres Ziel der Erfindung besteht darin, die in den Lagern der Drehachse der Gurtrolle bzw. der ersten Zuggliedrolle und der zweiten Zuggliedrolle auftretenden Reibungskräfte zu minimieren.

Dies geschieht aufgrund der Merkmale des Anspruches 13.

Aufgrund der Abzugsrichtung von Sicherheitsgurt und flexiblem Zugglied auf der gleichen Seite der Drehachse der Gurtrolle werden beim Aus- bzw. Einziehen des Sicherheitsgurtes die Lagerreibungskräfte in dem Lager bzw. in den Lagern der Gurtrolle zumindest so stark reduziert, daß nur geringe Lagerreibung auftritt. Aufgrund des geringen Durchmessers der Drehachse der zweiten Zuggliedrolle kann auch dort die Lagerreibung minimal gehalten werden. Bevorzugt beträgt der Durchmesser der vorzugsweise gehäusefest angeordneten Drehachse der zweiten Zuggliedrolle nur 2 bis 5 mm.

Die Erfindung wird im folgenden beispielsweise anhand der Zeichnung beschrieben; in dieser zeigt
- Fig. 1: eine schematische Schnittansicht eines erfindungsgemäßen federangetriebenen Gurtaufrollers,
- Fig. 2: eine perspektivische schematische Wiedergabe der Zuggliedrollenanordnung nach Fig. 1, wobei zusätzlich ein Freilauf zwischen Gurtrolle und erster Fadenrolle vorgesehen ist,
- Fig. 3: einen schematischen Schnitt durch die erste Fadenrolle des Gurtaufrollers nach den Fig. 1 und 2, wobei links und rechts der Mittelachse 36 der ersten Fadenrolle zwei verschiedene Ausführungsformen gezeigt sind, und
- Fig. 4: eine Schnittansicht analog Fig. 1, wobei zwischen Gurtrolle und erster Fadenrolle zwei Ausführungsbeispiele eines elastischen Drehmomentübertragungsgliedes wiedergegeben sind, von denen eines in ausgezogenen Linien und das andere gestrichelt dargestellt ist.

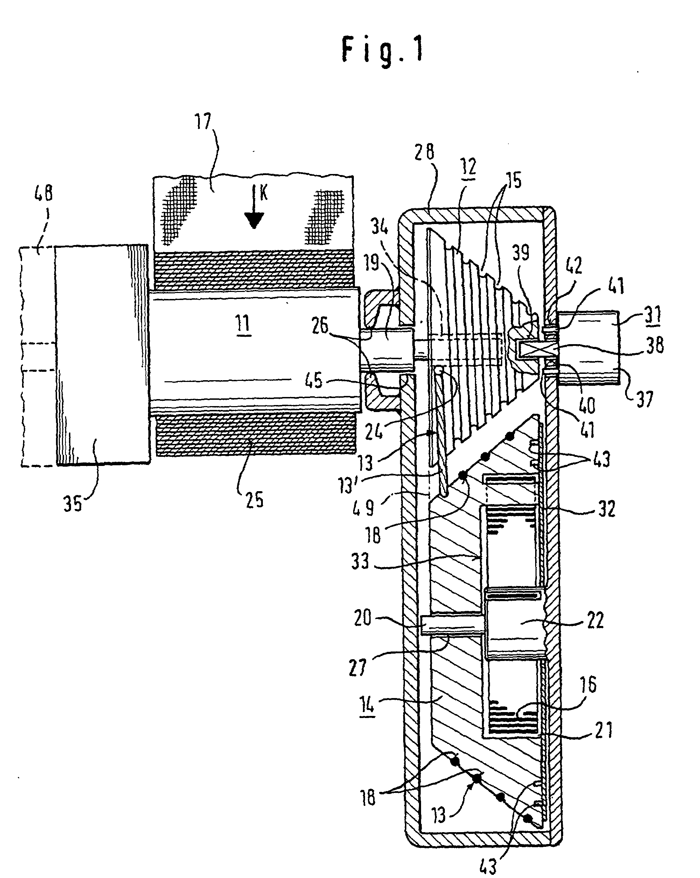

Nach Fig. 1 weist ein erfindungsgemäßer Gurtaufroller eine Gurtrolle 11 auf, auf die ein nur mit einem kurzen Stück angedeuteter Sicherheitsgurt 17 aufwickelbar ist. Die Gurtrolle 11 ist mittels einer Welle 19 von relativ großem Durchmesser in zumindest einem nur schematisch angedeuteten Lager 26 drehbar an einem Gehäuse 28 gelagert. An dem von der Gurtrolle 11 abgewandten Ende der Welle 19 ist innerhalb des Gehäuses 28 eine konisch ausgebildete Fadenrolle 12 angeordnet, welche auf ihrem Umfang mit einer wendelförmigen Führungsrille 15 versehen ist.

Nach Fig. 1 ist neben der Fadenrolle 12 mit paralleler Achse 20 und seitlich ausgerichtet eine weitere Fadenrolle 14 vorgesehen, welche gegenläufig zu der ersten Fadenrolle 12 konisch verläuft und deren kleinerer Durchmesser gleich dem größeren Durchmesser der ersten Fadenrolle 12 ist. Auch die zweite Fadenrolle 14 weist auf ihrem Umfang eine wendelförmige Führungsrille 18 auf.

Die zweite Fadenrolle 14 sitzt drehbar auf einer gehäusefesten Welle 20, die parallel und im seitlichen Abstand zur Welle 19 am Gehäuse 28 befestigt ist und einen wesentlich geringeren Durchmesser als die Welle 19 aufweist, so daß die Reibung in dem zwischen der Welle 20 und der zweiten Fadenrolle 14 gebildeten Zapfenlager 27 möglichst gering ist. Zweckmäßigerweise soll der Durchmesser der Welle 20 bzw. des Lagers 27 5 mm nicht übersteigen.

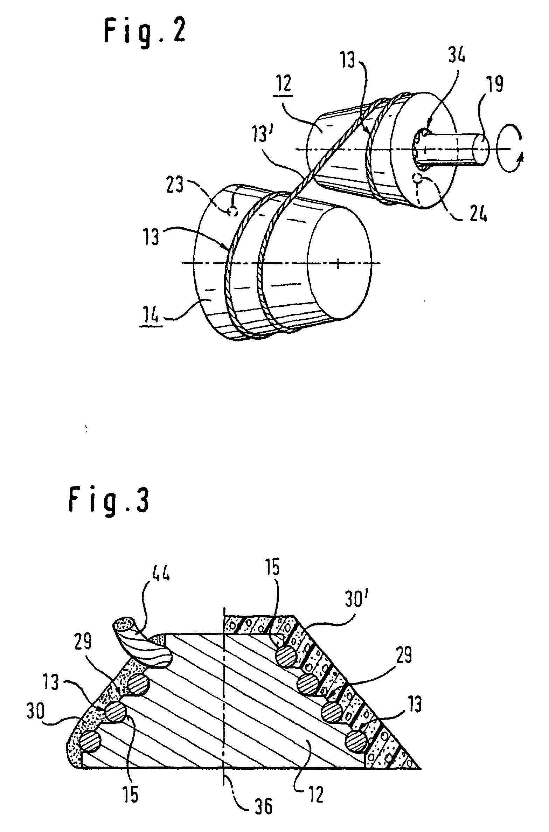

Die zweite Fadenrolle 14 weist gemäß Fig. 1 einen koaxialen Hohlraum 21 auf, in welchem eine Spiralfederanordnung 16 vorgesehen ist, die einerseits an einem die Welle 20 tragenden gehäusefesten Zapfen 22 und andererseits am Innenumfang der Fadenrolle 14 befestigt ist. Die Spiralfeder 16 überträgt auf die Fadenrolle 14 ein Drehmoment, welche einen in ihre Führungsrille 18 eingelegten und gemäß Fig. 2 bei 23 befestigten Faden 13 aufzuwickeln trachtet. Der Faden 13 erstreckt sich nach den Fig. 1 und 2 von dem engsten Teil der Fadenrolle 14 zu einem damit ausgerichteten Teil der Führungsrille 15 der Fadenrolle 12, wo der Faden 13 bei 24 an der Oberfläche der Fadenrolle 12 befestigt ist.

In der aus Fig. 1 ersichtlichen Wickelposition ist der Faden 13 weitgehend vollständig auf die Fadenrolle 14 aufgewickelt und weitgehend vollständig von der ersten Fadenrolle 12 abgewickelt. In diesem Zustand ist der Gurtwickel 25 auf der Gurtrolle 11 am dicksten, d.h., daß nunmehr eine maximale Gurtlänge auf der Gurtrolle 11 aufgewickelt ist und der Gurt 17 seine geringste Länge erreicht hat.

Wird nun der Gurt 17 entgegen der Rückzugskraft K in Fig. 1 langsam ausgezogen, so dreht sich die erste Fadenrolle 12 in einem Drehsinn, daß der Faden 13 sukzessive auf die erste Fadenrolle 12 aufgewickelt wird, wobei er sich zunehmend in die Führungsrille 15 einlegt. Gleichzeitig wird der Faden 13 mehr und mehr von der zweiten Fadenrolle 14 abgewickelt. Bei schnellem Ausziehen des Sicherheitsgurtes 17 oder bei unfallbedingten Beschleunigungen wird in üblicher Weise eine nur schematisch angedeutete Gurtauszugssperre 48 wirksam, die ein weiteres Ausziehen des Sicherheitsgurtes 17 verhindert. Weiter kann auf die Gurtrolle 11 eine Gurtstraffereinrichtung 35 einwirken, die bei einer unfallbedingten Beschleunigung ein schlagartiges Aufwickeln des Sicherheitsgurtes 17 um . ein vorbestimmtes Stück auslöst, damit dieser sich fest an den Körper der gesicherten Person anlegt, worauf dann ebenfalls die Auszugssperre wirksam wird.

Da erfindungsgemäß der Steigungswinkel, d.h. der Winkel zwischen der geradlinigen Verlängerung der Führungsrillen 15, 18 an den Einmündungsstellen des geradlinigen Fadenstückes 13' und der senkrecht auf der Drehachse 19, 20 stehenden Ebene 49, beider Führungsrillen 15, 18 an den Einmündungsstellen gleich ist und außerdem durch entsprechende Befestigung der Fadenenden bei 23, 24 dafür gesorgt ist, daß das frei und geradlinig zwischen den Fadenrollen 12, 14 verlaufende Fadenstück 13' knickfrei in die beiden Führungsrillen 15, 18 einmündet, nimmt bei gleichmäßigem axialen Abstand der Führungsrille 15 auf der ersten Fadenrolle 12 der axiale Abstand der Windungen der Führungsrille 18 auf der einen größeren Durchmesser aufweisenden Fadenrolle 14 axial zu größerem Durchmesser hin stetig zu, was aus Vereinfachungsgründen in der Zeichnung nicht im einzelnen dargestellt ist, sich aber aus der EP 0 581 228 A1 im einzelnen ergibt.

Nach Fig. 1 ist auf der der Gurtrolle 11 axial gegenüberliegenden Seite des Gehäuses 28 ein Drehsicherungselement 31 vorgesehen, welches lediglich während der Montage der Gesamtanordnung dort angebracht wird. Es besteht aus einem zylindrischen Kopf 37, der einen zentralen Vierkantzapfen 38 aufweist, der durch eine runde Bohrung 40 in der Wand des Gehäuses 28 in eine dazu komplementäre koaxiale Vierkantbohrung 39 der ersten Fadenrolle 12 eingreift. Weiter erstrecken sich von der gleichen Seite wie der Vierkantzapfen 38 Stifte 41 in dazu komplementäre Bohrungen 42 der Wand des Gehäuses 28. Aufgrund dieser Anordnung des Drehsicherungselementes 31 wird die erste Fadenrolle 12 drehfest am Gehäuse 28 gehalten. Es wäre auch möglich, die Bohrung 40 wie den Zapfen 38 vierkantförmig zu gestalten und auf die Stifte 41 sowie die Bohrungen 42 zu verzichten. Weiter könnten die Stifte 41 bis in entsprechende Bohrungen in der Fadenrolle 12 reichen und auf den Vierkantzapfen 38 sowie die Bohrungen 39, 40 verzichtet werden.

Nach Fig. 1 ist der Hohlraum 21, in welchem die Spiralfeder 16 angeordnet ist, auf der den größten Durchmesser aufweisenden Seite der zweiten Fadenrolle 14 durch eine plattenartige Abdeckung 32 abgedeckt, welche durch geeignete Befestigungsmittel 43 drehfest mit der Fadenrolle 14 verbunden ist.

Die Abdeckung 32 kann als durchgehende Platte ausgebildet sein, doch besteht sie bevorzugt aus einer mit zahlreichen Durchbrechungen versehenen Platte, da es nur darauf ankommt, daß die Spiralfeder 16 sowohl auf der Seite der Abdeckung 32 als auch an der gegenüberliegenden Seite des Hohlraumes 21 (Wand 33) ausschließlich mit drehenden Teilen in Berührung kommt.

Nach den Fig. 1 und 2 ist die Gurtrolle 11 drehfest mit der ersten Drehachse 19 verbunden, welche nicht direkt, sondern vielmehr über eine Freilaufanordnung 34 koaxial in Verbindung mit der ersten Fadenrolle 12 steht. Weiter ist die Gurtrolle 11 mit einer nur schematisch angedeuteten Gurtstraffereinrichtung 35 verbunden, welche im Falle einer unfallbedingten Beschleunigung eine schlagartige Drehung der Gurtrolle 11 in Gurtaufrollrichtung bewirkt, damit der zunächst lose am Körper des Insassen anliegende Sicherheitsgurt 17 so stark gestrafft wird, daß der Insasse nicht in einen zu lockeren Gurt hineinfällt und dadurch Schaden nimmt.

Wie sich insbesondere aus Fig. 2 ergibt, ist die Freilaufanordnung 34 so ausgebildet, daß zwar jederzeit von der Fadenrolle 12 beim Abwickeln des Fadens 13 ein Aufrollmoment auf die Gurtrolle 11 ausgeübt wird, jedoch beim Antrieb der Gurtrolle 11 durch die Gurtstraffereinrichtung 35 in Richtung des Pfeiles in Fig. 2 kein oder nur ein minimales Drehmoment auf die erste Fadenrolle 12 übertragen wird. Auf diese Weise wird vermieden, daß durch eine zu starke Beschleunigung der ersten Fadenrolle 12 in Fadenabwickelrichtung das Zugelement 13 locker wird und aus den Führungsrillen 15, 18 herausspringt.

Die Freilaufanordnung kann auch durch eine Ratschenanordnung verwirklicht werden.

Gemäß Fig. 3 kann der auf die erste Fadenrolle 12 bei der Montage aufgewickelte Faden 13 entweder durch eine Wachsschicht 30 abgedeckt werden, welcher die gesamte bewickelte Oberfläche 29 überzieht und dadurch ein Herabfallen der Windungen des Fadens 13 aus den Führungsrillen 15 verhindert. Zur Sicherung des Fadens 13 in der Führungsrille 15 kann aber nach der Darstellung rechts von der Mittelachse 36 auch eine z.B. aus Schaumstoff bestehende Abdeckhaube 30' verwendet werden, die von der den geringeren Durchmesser aufweisenden Seite der konischen Fadenrolle 12 aufgesetzt wird und überall an der bewickelten Oberfläche 29 anliegt und dadurch den Faden 13 in der Führungsrille 15 hält.

Die Montage eines erfindungsgemäßen Gurtaufrollers geht nun wie folgt vor sich:

Zunächst wird durch eine geeignete Vorrichtung der Faden 13 auf die erste Fadenrolle 12 aufgewickelt und dann mittels einer Wachsschicht 30 (Fig. 3 links von der Mittelachse 36) oder eine elastische Abdeckhaube 30' (Fig. 3 rechts von der Mittelachse 36) in der aufgewickelten Position fixiert.

Nunmehr werden die Fadenrollen 12, 14 im Gehäuse 28, das in geeigneter Weise zu öffnen ist, angeordnet. Das vom den geringen Durchmesser aufweisenden axialen Ende der ersten Zuggliedrolle 12 vorstehende Fadenende 44 wird nunmehr an der daneben befindlichen zweiten Fadenrolle 14 in geeigneter Weise befestigt, und zwar bei voll vorgespannter Spiralfeder 16. Auch hierfür kann eine geeignete Montagevorrichtung verwendet werden.

Um nun nach dem Anbringen des Fadenendes 44 an der zweiten Fadenrolle 14 ein sofortiges Abwickeln des Fadens 13 von der ersten Fadenrolle 12 zu verhindern, wird die erste Fadenrolle 12 durch Einstecken des Vierkantzapfens 38 des Drehsicherungselementes 31 in die Vierkantbohrung 39 und der Stifte 41 in die Bohrungen 42 des Gehäuses 28 drehfest am Gehäuse 28 gehalten. Hierbei wird das Zugelement 13 so gespannt, daß es sicher in den Führungsrillen 15, 18 gehalten wird.

In diesem Stadium der Montage ist die Drehachse 19 der Gurtrolle 11 mit der Freilaufanordnung 34 noch nicht in die erste Fadenrolle 12 eingesteckt, so daß die erste Fadenrolle 12 ausschließlich durch das Drehsicherungselement 31 nicht nur drehfest, sondern auch zentriert, d.h. axial mit der Durchtrittsbohrung 45 im Gehäuse 28 für die Drehachse 19 ausgerichtet ist.

Nunmehr kann die im Gehäuse 28 funktionsfähig angebrachte Fadenanordnung durch Einstecken der Drehachse 19 mit der Freilaufanordnung 34 in eine entsprechende unrunde Bohrung der ersten Fadenrolle 12 mit der Gurtrolle 11 verbunden werden.

Nach Herstellung dieser Verbindung wird das Drehsicherungselement 31 axial vom Gehäuse 28 abgezogen, worauf die Spiralfeder 16 die erste Fadenrolle 12 über die zweite Fadenrolle 14 und den Faden 13 in Gurtaufwickelrichtung drehen kann und die Gurtrolle 11 entsprechend mitgenommen wird, wobei der Gurtwickel 25 gebildet wird.

Beim jetzt erfolgenden Abwickeln des Fadens 13 von der ersten Gurtrolle 12 platzt die Wachsschicht 30 (Fig. 3) einfach ab, wodurch die Führungsrille 15 schließlich völlig freigelegt wird.

Durch Herausziehen des Sicherheitsgurtes 17 entgegen dem Pfeil K in Fig. 1 wird dann die erste Fadenrolle 12 wieder in entgegengesetzter Richtung gedreht, wobei der Faden 13 sich zunehmend von der zweiten Fadenrolle 14 ab- und auf die erste Fadenrolle 12 aufwickelt. Die Freilaufanordnung 34 gewährleistet hierbei eine einwandfreie Drehmomentübertragung.

Wird nun im Falle einer unfallbedingten Beschleunigung die Gurtstraffereinrichtung 35 betätigt, so wird die Gurtrolle 11 in Gurtaufwickelrichtung schlagartig in Drehung versetzt, wobei jedoch die Freilaufanordnung 34 eine Übertragung des entsprechenden Drehmomentes von der Drehachse 19 auf die erste Fadenrolle 12 verhindert und so ein Schlaffwerden des Fadens 13 vermieden wird. Sobald der Sicherheitsgurt 17 gestrafft ist und die Gurtauszugssperre zur Wirkung gekommen ist, steht die Gurtrolle 11 still, und der Antrieb der ersten Zuggliedrolle 12 durch die Federanordnung 16 über die zweite Zuggliedrolle 14 und den Faden 13 führt zum erneuten Einrücken des Freilaufs 34.

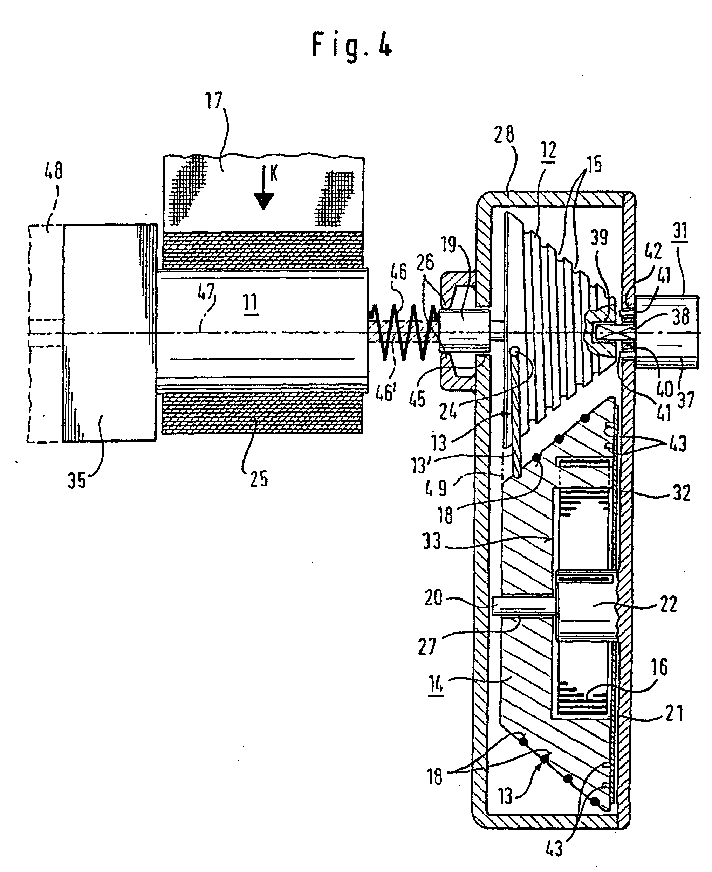

Nach Fig. 4, in der gleiche Bezugszahlen entsprechende Bauelemente wie in den vorangehenden Figuren bezeichnen, ist zwischen die Drehachse 19 der ersten Fadenrolle 12 und die Drehachse 47 der Gurtrolle 11 eine Schraubenfeder 46 angeordnet, welche ein elastisches Drehmomentübertragungsglied darstellt. Die Feder 46 arbeitet erfindungsgemäß als Torsionsfeder und könnte beispielsweise auch durch eine Spiralfeder oder einen in Fig. 4 gestrichelt angedeuteten Torsionsstab 46' ersetzt werden.

Der Wickelsinn der Schraubenfeder 46 ist derart, daß die von der Federanordnung 16 über die zweite Fadenrolle 14 und den Faden 13 zu einer Drehbewegung angetriebene erste Fadenrolle 12 bei festgespanntem Sicherheitsgurt 17 oder wirksam gewordener Auszugssperre die Schraubenfeder 46 etwa bis zur Hälfte des zur Verfügung stehenden Feder-Winkelbewegungsbereiches eindreht. Dann ist ein Gleichgewicht zwischen den Drehmomenten der Federanordnung 16 und der Schraubenfeder 46 erreicht, so daß die Drehbewegung der Fadenrollen 12, 14 beendet wird.

Wenn der Sicherheitsgurt 17 zu locker an der angeschnallten Person anliegt, setzt die Vorspannung der Schraubenfeder 46 die Gurtrolle 11 in Aufwickelrichtung in Bewegung. Aufgrund der hierdurch erfolgenden Entspannung der Schraubenfeder 46 kann die Federanordnung 16 die Fadenrollen 12, 14 erneut in Drehung versetzen, so daß die Schraubenfeder 46 immer wieder nachgespannt wird und die Gurtrolle 11 sich weiter dreht, bis der Gurt 17 sich in der gewünschten Weise an die gesicherte Person angelegt hat, worauf sich das Gleichgewicht zwischen den Federn 16 und 46 erneut selbsttätig einstellt.

Wird nun der Gurtstraffer 35 im Falle einer unfallbedingten Beschleunigung wirksam, so wird die Gurtrolle 11 schlagartig in Gurtaufwickelrichtung in Drehbewegung versetzt, wobei augenblicklich die Feder 46 entspannt wird und kein Drehmoment auf die erste Fadenrolle 12 ausübt, wodurch der Faden 13 weitgehend straff bleibt. Aufgrund des herabgesetzten Drehmomentes der Schraubenfeder 46 beginnt jedoch jetzt die Federanordnung 16 die Fadenrollen 12, 14 zu drehen, bis schließlich das Gleichgewicht zwischen den Drehmomenten der Federn 16 und 46 wieder hergestellt ist. Durch Einschaltung der Feder 46 wird also eine Entspannung des Fadens 13 und somit ein Herausspringen aus den Rillen 15, 18 vermieden.

Der gleiche Dämpfungseffekt wird erzielt, wenn der Sicherheitsgurt 17 plötzlich ausgezogen und dann anschließend gleich durch die Auszugssperre 48 wieder angehalten wird. Die Feder 46 verhindert dabei ein so plötzliches Abstoppen der Drehbewegung der ersten Fadenrolle 12, daß ein Weiterdrehen der zweiten Fadenrolle 14 aufgrund ihrer Trägheit nicht zur völligen Entspannung des Fadens 13 führt.

Die gleichen Wirkungen werden durch einen entsprechend dimensionierten elastischen Block 46' erzielt, der eine Torsionsfeder darstellt und zwischen den Drehachsen 19, 47 wirksam ist.

Es wäre auch möglich, die Drehachsen 19, 47 unmittelbar miteinander zu verbinden und ihrerseits als elastisches Drehübertragungsglieder auszubilden.

## Patentansprüche

1. Federangetriebener Aufroller für Sicherheitsgurte (17) bei Kraftfahrzeugen mit einer Gurtrolle (11), die drehfest mit einer ersten, sich in einer Axialrichtung verjüngenden Zuggliedrolle (12) mit einer wendelförmigen Führungsrille (15) auf ihrem Umfang verbunden ist, welche über ein entgegen dem Wickelsinn des Sicherheitsgurtes (17) auf der Gurtrolle (11) in die Führungsrille (15) gewickeltes, mit einem Ende an der Zuggliedrolle (12) befestigtes flexibles Zugglied (13) drehfest mit einer weiteren, im Abstand und mit parallel zur Achse der ersten Zuggliedrolle (12) verlaufender Achse angeordneten, zweiten sich in entgegengesetzter Axialrichtung verjüngenden Zuggliedrolle (14) mit einer wendelförmigen Führungsrille (18) verbunden ist, an der das andere Ende des Zuggliedes (13) befestigt und in deren Führungsrille (18) das Zugglied (13) aufgewickelt ist und die durch eine Federanordnung (16) in Aufwickelrichtung des Zuggliedes (13) auf der zweiten Zuggliedrolle (14) und des Sicherheitsgurtes (17) auf der Gurtrolle (11) vorgespannt ist, wobei die beiden Führungsrillen (15, 18) derart ausgebildet und auf den Zuggliedrollen (12, 14) angeordnet sind, daß das die beiden Zuggliedrollen (12, 14) verbindende gespannte Zuggliedstück (13') zumindest im wesentlichen knickfrei in beide auf den Zuggliedrollen (12, 14) befindlichen Zuggliedstücke übergeht, wobei die Federanordnung (16) in einem Hohlraum (21) der zweiten Zuggliedrolle (14) untergebracht ist, welcher zumindest teilweise von der Führungsrille (15) umgeben ist, und wobei die beiden Zuggliedrollen (12, 14) in einem Gehäuse (28) untergebracht sind, dessen eine Wand dem Hohlraum (21) gegenüberliegt,
**dadurch gekennzeichnet,**
**daß** zwischen der Wand und dem Hohlraum (21) eine axial an der zweiten Zuggliedrolle (14) befestigte Abdeckung (32) vorgesehen ist, welche den Hohlraum (21) abschließt, derart, daß die Federanordnung (16) nur von sich mit der zweiten Zuggliedrolle (14) drehenden Teilen umgeben ist.

2. Aufroller nach Anspruch 1,
**dadurch gekennzeichnet,**
**daß** zwischen die Gurtrolle (11) und die erste Zuggliedrolle (12) eine Freilaufanordnung (34) geschaltet ist, welche bei Antrieb der ersten Zuggliedrolle (12) in Gurtaufrollrichtung Drehmoment auf die Gurtrolle (11) überträgt, bei Antrieb der Gurtrolle (11) in Gurtaufrollrichtung durch eine andere Antriebsquelle, z.B. durch eine Gurtstraffereinrichtung (34) kein oder nur ein minimales Drehmoment auf die erste Zuggliedrolle (12) überträgt.

3. Aufroller nach Anspruch 1,
**dadurch gekennzeichnet,**
**daß** zwischen die Gurtrolle (11) und die erste Zuggliedrolle (12) ein derart nachgiebiges Drehmomentübertragungsglied (46) geschaltet ist, daß das von der Federanordnung (16) an der ersten Zuggliedrolle (12) erzeugte Gurtaufwickel-Drehmoment noch voll auf die Gurtrolle (11) übertragen wird, jedoch bei plötzlichen Drehbeschleunigungen oder -verzögerungen der Gurtrolle (11), z.B. durch einen Gurtstraffer oder plötzliches Abbremsen der Gurtrolle (11), in Gurtaufwickelrichtung bzw. Gurtabwickelrichtung die auf die erste Zuggliedrolle (12) übertragene Drehbeschleunigung bzw. -verzögerung zumindest solange und in einem solchen Maße reduziert wird, daß das sich von der ersten Zuggliedrolle zur zweiten Zuggliedrolle (14) erstreckende Zugglied (13') nicht zeitweise zugspannungsfrei wird.

4. Aufroller nach Anspruch 3,
**dadurch gekennzeichnet,**
**daß** das Drehmomentübertragungsglied elastisch nachgiebig ist.

5. Aufroller nach Anspruch 4,
**dadurch gekennzeichnet,**
**daß** das Drehmomentübertragungsglied koaxial zwischen den miteinander ausgerichteten Drehachsen (19, 47) der ersten Zuggliedrolle und der Gurtrolle (11) angeordnet ist.

6. Aufroller nach Anspruch 4 oder 5,
**dadurch gekennzeichnet,**
**daß** das Drehmomentübertragungsglied durch das Vorspanndrehmoment der Federanordnung (16) um ein deutliches Drehwinkelstück vorgespannt ist.

7. Aufroller nach Anspruch 6,
**dadurch gekennzeichnet,**
**daß** das Drehmomentübertragungsglied normalerweise auf 30 bis 70%, vorzugsweise 40 bis 60 % und insbesondere etwa 50 % seiner Gesamt-Drehwinkelbewegungskapazität vorgespannt ist.

8. Aufroller nach einem der Ansprüche 4 bis 7,
**dadurch gekennzeichnet,**
**daß** die Federkonstante des elastisch nachgiebigen Drehmomentübertragungsgliedes (46) so gewählt ist, daß die zeitweise völlige Entspannung des sich zwischen der ersten und zweiten Zuggliedrolle (12, 14) erstreckende Fadenstück (13') vermieden wird.

9. Aufroller nach einem der Ansprüche 5 bis 8,
**dadurch gekennzeichnet,**
**daß** das Drehmomentübertragungsglied ein parallel und konzentrisch zu den Drehachsen (19, 47) der ersten Zuggliedrolle (12) und der Gurtrolle (11) angeordnete Schraubenfeder (46) ist, deren Ende mit der Gurtrolle (11) bzw. der ersten Zuggliedrolle (12) fest verbunden sind.

10. Aufroller nach Anspruch 9,
**dadurch gekennzeichnet,**
**daß** der Wickelsinn der Schraubenfeder (46) derart ist, daß sie durch das Vorspanndrehmoment der Federanordnung (16) zusammengedreht wird.

11. Aufroller nach einem der Ansprüche 5 bis 8,
**dadurch gekennzeichnet,**
**daß** das Drehmomentübertragungsglied ein elastischer Block (46') ist, der einerseits mit der Gurtrolle (11) und andererseits mit der ersten Zuggliedrolle (12) fest verbunden ist.

12. Aufroller nach einem der Ansprüche 5 bis 8,
**dadurch gekennzeichnet,**
**daß** die vorzugsweise koaxial miteinander verbundenen Achsen (19, 47) der ersten Zuggliedrolle (12) und der Gurtrolle (11) selbst als das elastisch nachgiebige Drehmomentübertragungsglied ausgebildet sind.

13. Aufroller nach einem der Ansprüche 1 bis 12,
**dadurch gekennzeichnet,**
**daß** der Sicherheitsgurt (17) auf der gleichen Seite der Drehachse (19) der Gurtrolle (11) wie das Zugglied (13) von der ersten Zuggliedrolle (12), jedoch in entgegengesetzter Richtung wie das Zugglied (13) abgezogen wird und daß der Durchmesser der Drehachse (20) der auf der von der Gurtauszugsrichtung abgewandten Seite der ersten Zuggliedrolle (12) angeordneten zweiten Zuggliedrolle (14) deutlich geringer als der der Drehachse (19) der Gurtrolle (11) ist.

## Claims

1. A spring-driven reeling mechanism for safety belts (17) in motor vehicles comprising a belt reel (11) which is rotationally fixedly connected to a first draw reel (12) which tapers in an axial direction and has a spirally-shaped guide groove (15) on its periphery and which is rotationally fixedly connected, via a flexible draw member (13) wound contrary to the direction of winding of the safety belt (17) on the belt reel (11) into the guide groove (15) and secured at one end to the draw reel (12), to a further second draw reel (14), which has a spiral guide groove (18), which tapers in the opposite axial direction and has an axis which is arranged spaced from and parallel to the axis of the first draw reel (12), with the other end of the draw member (13) being secured to the second draw reel (14) and being wound into its guide groove (18), and which is biased by a spring arrangement (16) in the winding-up direction of the draw member (13) onto the second draw reel (14) and of the safety belt (17) onto the belt reel (11), and wherein the two guide grooves (15, 18) are so shaped and arranged on the draw reels (12, 14) that the tensioned draw member piece (13') which connects the two draw reels (12, 14) passes essentially kink-free into the two draw member pieces on the draw reels (12, 14), with the spring arrangement (16) being accommodated in a hollow space (21) of the second draw reel (14), said hollow space being at least partly surrounded by the guide groove (15), and with the two draw reels (12, 14) being accommodated in a housing (28) whose one wall is opposite to the hollow space (21),
**characterized in that** a cover (32) axially fastened to the second draw reel (14) is provided between the wall and the hollow space (21) which closes off the hollow space (21) such that the spring arrangement (16) is only surrounded by parts rotating with the second draw reel (14).

2. A reeling mechanism in accordance with claim 1, **characterized in that** a freewheel arrangement (34) is interposed between the belt reel (11) and the first draw reel (12) which, when the first draw reel (12) is driven in the direction of belt winding up, transmits torque to the belt reel (11) and, when the belt reel (11) is driven in the direction of belt winding up by another drive source, e.g. by a belt tensioning device (34), transmits no, or only minimum, torque to the first draw reel (12).

3. A reeling mechanism in accordance with claim 1, **characterized in that** a torque transmission member (46) is interposed between the belt reel (11) and the first draw reel (12) and has a resilience such that the belt winding torque produced by the spring arrangement (16) at the first draw reel (12) is still fully transmitted to the belt reel (11), but that, in the event of sudden torsional accelerations or decelerations of the belt reel (11), for example by a belt tensioner or sudden braking of the belt reel (1), in the direction of the belt winding up or winding out, the torsional acceleration or deceleration transmitted onto the first draw reel (12) is reduced for at least so long and to such an extent that the tension member (13') extending from the first draw reel to the second draw reel (14) does not become free of tensile stress at times.

4. A reeling mechanism in accordance with claim 3, **characterized in that** the torque transmission member is elastically resilient.

5. A reeling mechanism in accordance with claim 4, **characterized in that** the torque transmission member is arranged coaxially between the mutually aligned axes of rotation (19, 47) of the first draw reel and the belt reel (11).

6. A reeling mechanism in accordance with claim 4 or claim 5,
**characterized in that** the torque transmission member is biased through a definite amount of angle of rotation by the bias torque of the spring arrangement (16).

7. A reeling mechanism in accordance with claim 6, **characterized in that** the torque transmission member is normally biased to 30 to 70%, preferably 40 to 60%, and in particular approximately 50%, of its total movement capacity for rotational angular movement.

8. A reeling mechanism in accordance with any of claims 4 to 7,
**characterized in that** the spring constant of the elastically resilient torque transmission member (46) is selected such that the complete timewise relaxation of the thread piece (13') extending between the first and second draw reels (12, 14) is avoided.

9. A reeling mechanism in accordance with any of claims 5 to 8,
**characterized in that** the torque transmission member is a helical spring (46) which is arranged parallel and concentrically to the axes of rotation (19, 47) of the first draw reel (12) and of the belt reel (11) and whose ends are fixedly connected to the belt reel (11) and the first draw reel (12) respectively.

10. A reeling mechanism in accordance with claim 9, **characterized in that** the sense of winding of the helical spring (46) is such that it is compressed by the bias torque of the spring arrangement (16).

11. A reeling mechanism in accordance with any of claims 5 to 8,
**characterized in that** the torque transmission member is an elastic block (46') which is fixedly connected to the belt reel (11) at one end and to the first draw reel (12) at the other end.

12. A reeling mechanism in accordance with any of claims 5 to 8,
**characterized in that** the axles (19, 17) of the first draw reel (12) and of the belt reel (11) which are preferably coaxially connected to one another are themselves formed as the elastically resilient torque transmission member.

13. A reeling mechanism in accordance with any of claims 1 to 12,
**characterized in that** the safety belt (17) is drawn out at the same side of the axle of rotation (19) of the belt reel (11) as the tension member (13) from the first draw reel (12), but in the opposite direction to the tension member (13); and **in that** the diameter of the axle of rotation (20) of the second draw reel (14) arranged at the side of the first draw reel (12) remote from the belt unwinding direction is much smaller than that of the axle of rotation (19) of the belt reel (11).

## Revendications

1. Enrouleur entraîné par ressort pour des ceintures de sécurité (17) dans des véhicules automobiles, comportant un rouleau à ceinture (11) qui est relié solidairement en rotation à un premier rouleau à organe de traction (12) qui va en se rétrécissant en direction axiale et qui présente une rainure de guidage (15) en forme d'hélice sur sa périphérie, qui est relié, via un organe de traction flexible (13) enroulé en sens opposé à la direction d'enroulement de la ceinture de sécurité (17) sur le rouleau à ceinture (11) dans la rainure de guidage (15) et fixé par une extrémité sur le rouleau à organe de traction (12), solidairement en rotation à un second rouleau à organe de traction (14) agencé à distance du premier rouleau à organe de traction (12) et comportant un axe parallèle à l'axe de ce dernier, ledit second rouleau allant en se rétrécissant en direction axiale opposée et présentant une rainure de guidage (18) en forme d'hélice, sur lequel est fixée l'autre extrémité de l'organe de traction (13) et dans la rainure de guidage (18) duquel est enroulé l'organe de traction (13) et qui est précontraint par un agencement à ressort (16) en direction d'enroulement de l'organe de traction (13) sur le second rouleau à organe de traction (14) et en direction d'enroulement de la ceinture de sécurité (17) sur le rouleau à ceinture (11), les deux rainures de guidage (15, 18) étant réalisées et agencées sur les rouleaux à organes de traction (12, 14) de telle sorte que le morceau d'organe de traction (13') tendu reliant les deux rouleaux à organes de traction (12, 14) se transforme du moins sensiblement sans pli dans les deux morceaux d'organe de traction situés sur les rouleaux à organes de traction (12, 14), l'agencement à ressort (16) étant logé dans une cavité (21) du second rouleau à organe de traction (14), cavité qui est entourée du moins en partie par la rainure de guidage (15), et les deux rouleaux à organes de traction (12, 14) sont logés dans un boîtier (28) dont une paroi est en regard de la cavité (21), **caractérisé en ce qu'**il est prévu entre la paroi et la cavité (21) un recouvrement (32) qui est fixé axialement sur le second rouleau à organe de traction (14) et qui referme la cavité (21) de telle sorte que l'agencement à ressort (16) est entouré uniquement par des pièces en rotation avec le second rouleau à organe de traction (14).

2. Enrouleur selon la revendication 1, **caractérisé en ce qu'**il est prévu entre le rouleau à ceinture (11) et le premier rouleau à organe de traction (12) un agencement à roue libre (34) qui, lors d'un entraînement du premier rouleau à organe de traction (12) en direction d'enroulement de ceinture, transmet un couple de rotation sur le rouleau à ceinture (11), et qui, lors d'un entraînement du rouleau à ceinture (11) en direction d'enroulement de ceinture, ne transmet pas de couple ou bien seulement un couple de rotation minimal au premier rouleau à organe de traction (12) par une autre source d'entraînement, par exemple par un dispositif tensionneur de ceinture (34).

3. Enrouleur selon la revendication 1, **caractérisé en ce qu'**il est prévu entre le rouleau à ceinture (11) et le premier rouleau à organe de traction (12) un organe de transmission de couple de rotation (46) flexible de telle sorte que le couple de rotation d'enroulement de ceinture généré par l'agencement à ressort (16) au niveau du premier rouleau à organe de traction (12) est encore complètement transmis au rouleau à ceinture (11), alors que lors d'accélérations ou de décélérations de rotation soudaines du rouleau à ceinture (11), par exemple par un tensionneur de ceinture ou lors d'un freinage soudain du rouleau à ceinture (11), l'accélération et la décélération de rotation transmises respectivement en direction d'enroulement de ceinture et en direction de déroulement de ceinture sont réduites au moins aussi longtemps et avec une telle intensité que l'organe de traction (13') s'étendant depuis le premier rouleau à organe de traction vers le second rouleau à organe de traction (14) n'est pas temporairement sans contrainte de traction.

4. Enrouleur selon la revendication 3, **caractérisé en ce que** l'organe de transmission de couple de rotation est élastique et flexible.

5. Enrouleur selon la revendication 4, **caractérisé en ce que** l'organe de transmission de couple de rotation est agencé coaxialement entre les axes de rotation (19, 47) orientés l'un par rapport à l'autre du premier rouleau à organe de traction et du rouleau à ceinture (11).

6. Enrouleur selon l'une ou l'autre des revendications 4 et 5, **caractérisé en ce que** l'organe de transmission de couple de rotation est précontraint d'un trajet angulaire de rotation significatif par le couple de rotation de précontrainte de l'agencement à ressort (16).

7. Enrouleur selon la revendication 6, **caractérisé en ce que** l'organe de transmission de couple de rotation est précontraint normalement sur 30 à 70 %, de préférence sur 40 à 60 % et en particulier sur environ 50 % de sa capacité totale de mouvement angulaire de rotation.

8. Enrouleur selon l'une quelconque des revendications 4 à 7, **caractérisé en ce que** la constante élastique de l'organe de transmission de couple de rotation élastique flexible (46) est choisie de manière à éviter la détente complète temporaire du tronçon de fil (13') entre le premier et le second rouleau à organes de traction (12, 14).

9. Enrouleur selon l'une quelconque des revendications 5 à 8, **caractérisé en ce que** l'organe de transmission de couple de rotation est un ressort hélicoïdal (46) agencé parallèlement et concentriquement aux axes de rotation (19, 47) du premier rouleau à organe de traction (12) et du rouleau à ceinture (11), dont les extrémités sont solidaires respectivement du rouleau à ceinture (11) et du premier rouleau à organe de traction (12).

10. Enrouleur selon la revendication 9, **caractérisé en ce que** le sens d'enroulement du ressort hélicoïdal (46) est tel qu'il est comprimé par le couple de rotation de précontrainte de l'agencement à ressort (16).

11. Enrouleur selon l'une quelconque des revendications 5 à 8, **caractérisé en ce que** l'organe de transmission de couple de rotation est un bloc élastique (46') qui est solidaire d'une part du rouleau à ceinture (11) et d'autre part du premier rouleau à organe de traction (12).

12. Enrouleur selon l'une quelconque des revendications 5 à 8, **caractérisé en ce que** les axes (19, 47) reliés de préférence coaxialement l'un à l'autre du premier rouleau à organe de traction (12) et du rouleau à ceinture (11) sont réalisés eux-mêmes sous la forme de l'organe de transmission de couple de rotation élastique flexible.

13. Enrouleur selon l'une quelconque des revendications 1 à 12, **caractérisé en ce que** la ceinture de sécurité (17) est tirée depuis le premier rouleau à organe de traction (12) sur le même côté de l'axe de rotation (19) du rouleau à ceinture (11) que l'organe de traction (13), mais en direction opposée à celle de l'organe de traction (13), et **en ce que** le diamètre de l'axe de rotation (20) du second rouleau à organe de traction (14) agencé sur le côté du premier rouleau à organe de traction (12), qui est détourné de la direction d'extraction de ceinture, est nettement inférieur à celui de l'axe de rotation (19) du rouleau à ceinture (11).
